# EUROPÄISCHE PATENTANMELDUNG

(11) **EP 3 396 485 A1**
(43) Veröffentlichungstag der Anmeldung: **31.10.2018**
(21) Anmeldenummer: 17167865.9
(22) Anmeldetag: 25.04.2017
(51) Int. Cl.: G05B 23/02, G05B 19/406

(54) **VERFAHREN UND VORRICHTUNG ZUR BEWERTUNG ZUMINDEST EINER MECHATRONISCHEN KENNGRÖSSE EINER PRODUKTIONS- ODER WERKZEUGMASCHINE**

(71) Anmelder: Siemens Aktiengesellschaft, 80333 München (DE)
(72) Erfinder: Haschka, Markus Stephan, 76131 Karlsruhe (DE); Schäfers, Elmar, 90763 Fürth (DE); Schür, Torsten, 91058 Erlangen (DE)

(57) **Zusammenfassung**

Die Erfindung ist ein Verfahren und eine nach dem Verfahren arbeitende Vorrichtung zur Bewertung zumindest einer mechatronischen Kenngröße (56) einer Produktions- oder Werkzeugmaschine (36), wobei die Bewertung erfolgt, indem diese mit zumindest einer vergleichbaren mechatronischen Kenngröße (56) zumindest einer anderen Produktions- oder Werkzeugmaschine (36) in Beziehung gesetzt wird und wobei die mechatronischen Kenngrößen (56) automatisch im Zuge einer Ausführung eines zur Ermittlung zumindest einer mechatronischen Kenngröße (56) bestimmten und durch eine Produktions- oder Werkzeugmaschine (36) ausgeführten Steuerungsprogramms (50) ermittelt werden.

## Beschreibung

Die Erfindung betrifft ein Verfahren sowie eine nach dem Verfahren arbeitende Vorrichtung zur Bewertung zumindest einer mechatronischen Kenngröße einer Produktions- oder Werkzeugmaschine.

Unter einer Produktions- oder Werkzeugmaschine ist allgemein ein programmgesteuertes Automatisierungssystem und damit zum Beispiel auch ein Industrieroboter zu verstehen. Hier und im Folgenden wird der Ausdruck Produktions- oder Werkzeugmaschine als Oberbegriff für Begriffe wie Werkzeugmaschine, Industrieroboter und dergleichen verwendet. Als Werkzeugmaschine werden bekanntlich alle Maschinen bezeichnet, die unter anderem im Maschinenbau und im Werkzeugbau zur Bearbeitung von Werkstücken mit Werkzeugen dienen. Zu den Werkzeugmaschinen gehören auch sogenannte NC- oder CNC-Maschinen. Ein Industrieroboter ist bekanntlich eine universelle, programmierbare Maschine, die neben einer Bearbeitung von Werkstücken auch zur Handhabung von Werkstücken sowie für Montagezwecke bestimmt und eingerichtet ist.

Eine mechatronische Kenngröße einer Produktions- oder Werkzeugmaschine oder einer Achse einer solchen Maschine beschreibt zum Beispiel eine Steifigkeit des Antriebsstrangs einer jeweiligen Maschinenachse über dem Verfahrweg, ein Spiel der von der Achse umfassten Komponenten (Spindelmutter, Führungsschuhe etc.), Reibeffekte in solchen Komponenten, Gleichlauffehler bezogen auf eine Grundperiode der Komponente und so weiter. Aus einer von der vorliegenden Erfindung ausgehenden Betrachtung folgt die Erkenntnis, dass es technisch grundsätzlich möglich ist, solche mechatronischen Kenngrößen aus definierten Bewegungen von Maschinenachsen einer programmgesteuerten Produktions- oder Werkzeugmaschine zu bestimmen.

In der nicht vorveröffentlichten europäischen Patentanmeldung 15197610.7 (Titel: Mechatronischer Fingerabdruck einer Maschine durch Steuerungssystem; Erfinder: Herren Forster, Schäfers, Bitterolf und Schür) ist eine Möglichkeit zur Ermittlung mechatronischer Kenngrößen beschrieben. Danach drückt sich ein mechatronischer Fingerabdruck in physikalischen Größen von Komponenten oder Systemen aus. Steuerungsseitig werden - wie bereits heute - Messdaten im laufenden Betrieb oder außerhalb der Produktion durch Identifikationsmessungen ermittelt. Die Steuerung berechnet dann aus diesen Messungen die physikalischen Größen, die präzise eine Komponenten (z.B. Kugelgewindetrieb) oder ein System (z.B. Antriebsstrang, Werkzeugmagazin) bezüglich bestimmter physikalischer Eigenschaften beschreiben. Diese ältere Anmeldung wird hiermit vollinhaltlich in die hier vorgelegte Beschreibung mit einbezogen, auch zu dem Zwecke, in dieser Anmeldung beschriebene Merkmale in Ansprüche zur Definition der der hier vorgelegten Beschreibung zugrunde liegenden Erfindung aufzunehmen.

In einem von einer Produktions- oder Werkzeugmaschine der eingangs genannten Art im Betrieb ausführbaren speziellen und nur für Diagnosezwecke, nämlich zur Ermittlung zumindest einer mechatronischen Kenngröße, bestimmten Steuerungsprogramm, insbesondere einem Steuerungsprogramm in Form eines NC-Programms, sind die Bewegungen jeder Maschinenachse derart definiert, dass eine oder mehrere im Folgenden mitunter kurz nur als Kenngrößen bezeichnete mechatronische Kenngrößen anhand von erzeugten Messdaten automatisch bestimmt werden können. Im Grundsatz sind bei allen Produktions- oder Werkzeugmaschinen deren Steuerungsprogramme gleichartig, also zumindest gleich aufgebaut, und umfassen zum Beispiel Anweisungen zum Fahren mit einer konstanten Geschwindigkeit, Anweisungen für Beschleunigungsvorgänge, Anweisungen für sogenannte Mikrometer-Schritte (einfache Wegvorgabe, Positionierungen) und so weiter. Eine Anpassung an die jeweils betrachtete Maschinenachse (Vorschubachse) ist allerdings erforderlich, um zum Beispiel unterschiedliche maximale Verfahrwege, unterschiedliche maximale Geschwindigkeiten, unterschiedliche maximale Beschleunigungen und so weiter zu berücksichtigen.

Eine automatische Bestimmung mechatronischer Kenngrößen ist zwar theoretisch möglich, Verfahren zu deren automatischer Bestimmung sind aber heute noch nicht in Gebrauch. Die Anpassung eines Steuerungsprogramms in Bezug auf eine zum Ermitteln einer oder mehrerer mechatronischer Kenngrößen günstige Anregung einer Maschinenachse müsste - wenn eine Erstellung eines Steuerungsprogramms zur Ermittlung mechatronischer Kenngrößen denn in Betracht gezogen worden sein sollte - manuell erfolgen. Dies ist aufwändig und fehleranfällig. Bei der Nachbearbeitung eines solchen manuell erstellten Steuerungsprogramms ist eine Überwachung und Anpassung durch einen Experten erforderlich. Eine große Datenbasis, welche eine solche Anpassung eines Steuerungsprogramms unterstützen und erleichtern könnte, ist nicht vorhanden. Ein einzelner Nutzer einer Produktions- und/oder Werkzeugmaschine hat nicht die erforderliche Anzahl von Maschinen, um eine leistungsfähige Datenbasis zu schaffen.

Eine Aufgabe der Erfindung besteht entsprechend darin, eine Möglichkeit für eine automatische Bewertung zumindest einer mechatronischen Kenngröße anzugeben.

Diese Aufgabe wird erfindungsgemäß mittels eines Verfahrens zur Bewertung zumindest einer mechatronischen Kenngröße einer im Folgenden mitunter kurz nur als Maschine bezeichneten Produktions- oder Werkzeugmaschine der eingangs genannten Art gelöst und zwar mit den Merkmalen des Anspruchs 1. Danach erfolgt die Bewertung der zumindest einen mechatronischen Kenngröße, indem diese mit zumindest einer vergleichbaren mechatronischen Kenngröße zumindest einer anderen Produktions- oder Werkzeugmaschine in Beziehung gesetzt wird. Eine zu bewertende mechatronische Kenngröße zur Reibung wird entsprechend mit einer anderen mechatronischen Kenngröße zur Reibung in Beziehung gesetzt und eine zu bewertende mechatronische Kenngröße zur Steifigkeit mit einer anderen mechatronischen Kenngröße zur Steifigkeit.

Die zumindest eine zu bewertende mechatronische Kenngröße einer Maschine wird im Folgenden kurz als Bewertungsgröße bezeichnet. Die zumindest eine vergleichbare mechatronische Kenngröße zumindest einer anderen Maschine, zu welcher die Bewertungsgröße in Beziehung gesetzt wird, wird im Folgenden kurz als Vergleichsgröße bezeichnet. Im Interesse einer besseren Lesbarkeit der nachfolgenden Beschreibung wird diese im Wesentlichen mit den Begriffen Bewertungsgröße und Vergleichsgröße (Singular) fortgesetzt. Dabei ist jeweils auch eine Mehrzahl von mechatronischen Kenngrößen mitzulesen, derart, dass als Bewertungsgröße eine Mehrzahl von mechatronischen Kenngrößen einer Maschine mit einer mechatronischen Kenngröße oder mehreren mechatronischen Kenngrößen einer oder mehrerer anderer Maschinen als Vergleichsgröße in Beziehung gesetzt werden kann.

Die bei der Bewertung betrachtete Bewertungsgröße wird automatisch im Zuge einer Ausführung eines zur Ermittlung der Bewertungsgröße bestimmten Steuerungsprogramms ermittelt. Das Steuerungsprogramm wird in grundsätzlich an sich bekannter Art und Weise durch eine Maschine (Produktions- oder Werkzeugmaschine) ausgeführt und aufgrund der Ausführung des Steuerungsprogramms resultieren Verfahrbewegungen zumindest einer Achse der Maschine. Dabei ergeben sich zum Beispiel mechanische Schwingungen, entsteht Wärme, fließen elektrische Ströme, werden Drehmoment aufgebracht und so weiter. Solche oder ähnliche Effekte sind mit grundsätzlich an sich bekannten Mitteln automatisch beobachtbar und werden zum Beispiel mittels einer grundsätzlich an sich bekannten Sensorik erfasst. Alternativ können charakteristische Werte, zum Beispiel Strom und/oder Spannung, auch aus einer Antriebssteuerung der Maschine oder der Achse ausgelesen werden. Die im Zusammenhang mit der Ausführung des Steuerungsprogramms beobachteten Daten werden im Folgenden zusammenfassend als Messwerte bezeichnet, auch wenn es sich zum Beispiel um lediglich errechnete Werte handelt. Diese werden in einer Datenbasis gespeichert. Auf Basis der bei der Ausführung des Steuerungsprogramms auf einer Maschine erhaltenen Messwerte kann zumindest eine mechatronische Kenngröße dieser Maschine oder der beim Ausführen des Steuerungsprogramms bewegten Achse dieser Maschine ermittelt werden. Die Datenbasis umfasst demnach zumindest eine mechatronische Kenngröße dieser Maschine oder zumindest eine Basis für eine mechatronische Kenngröße dieser Maschine.

Genauso, wie beim Ausführen des Steuerungsprogramms durch eine Maschine Daten für zumindest eine mechatronische Kenngröße dieser Maschine entstehen und in die Datenbasis eingehen, gilt dies auch für andere Maschinen (Produktions- oder Werkzeugmaschinen). Die Datenbasis umfasst demnach nach einer gewissen Zeit Daten von einer Vielzahl von Maschinen und damit eine entsprechende Vielzahl mechatronischer Kenngrößen oder zumindest eine Basis für eine solche Vielzahl mechatronischer Kenngrößen.

Aufgrund dieser Datenbasis erfolgt die Bewertung der Bewertungsgröße (mechatronische Kenngröße(n) einer Maschine/Achse) in Relation zur Vergleichsgröße (mechatronische Kenngröße(n) zumindest einer anderen Maschine/Achse).

Der Vorteil der hier vorgeschlagenen Bewertung der Bewertungsgröße besteht darin, dass mit der Datenbasis ein ausreichend großer Datenpool gegeben ist, welcher eine solche Bewertung erst sinnvoll macht. Die Vergleichbarkeit ist gegeben, indem eine Bewertungsgröße nur mit einer vergleichbaren Vergleichsgröße (Steifigkeit zu Steifigkeit; Reibung zu Reibung usw.) in Beziehung gesetzt wird. Die Vergleichbarkeit ist aber vor allem auch aufgrund der zur Ermittlung der Messwerte ausgeführten Steuerungsprogramme gegeben. Das jeweils ausgeführte Steuerungsprogramm ist nur für Diagnosezwecke bestimmt und zum Beispiel nicht zur Fertigung oder Bearbeitung eines Werkstücks. Das Steuerungsprogramm wird mit dem Fokus generiert, dass bei der Ausführung des Steuerungsprogramms auf der jeweiligen Maschine die Achse, einzelne Achsen oder alle Achsen der Maschine in einer Art und Weise angesteuert werden, die eine möglichst gute Anregung der jeweiligen Achse im Hinblick auf eine Erfassung von Messwerten zur Ermittlung mechatronischer Kenngrößen ermöglicht. Dazu werden mittels des Steuerungsprogramms zum Beispiel Verfahrbewegungen mit hohen Beschleunigungen, insbesondere Beschleunigungen, wie sie im normalen Produktionsbetrieb nicht oder eher nicht vorkommen, ausgelöst. Solche oder ähnliche Verfahrbewegungen führen zu einer zur Bewertung der Maschine oder der jeweiligen Achse besonders gut geeigneten Anregung der Maschine bzw. der Achse und ermöglichen entsprechend eine Ermittlung einer für die Maschine bzw. Achse charakteristischen mechatronischen Kenngröße.

Mit der hier vorgeschlagenen Möglichkeit zur automatischen Bewertung einer Bewertungsgröße in Relation zu einer Vergleichsgröße erhält der Betreiber einer Maschine zum Beispiel schnell die Information, ob die zu seiner Maschine ermittelte Bewertungsgröße in einem üblichen Bereich liegt. Dies ist dann der Fall, wenn sich die ermittelte Bewertungsgröße nicht statistisch signifikant von der Vergleichsgröße unterscheidet. Die Bewertungskriterien, also zum Beispiel wann eine statistisch signifikante Abweichung vorliegt, können bedarfsweise vorgegeben werden, zum Beispiel durch oder unter Mitwirkung des Herstellers der Maschine, der Maschineachse oder einzelner Achskomponenten.

Die oben genannte Aufgabe wird auch mittels einer Vorrichtung gelöst, die zur Ausführung des Verfahrens sowie optional zur Ausführung spezieller Ausführungsformen des Verfahrens bestimmt und eingerichtet ist. Ein Computersystem mit Mitteln zur Ausführung des Verfahrens oder spezieller Ausführungsformen des Verfahrens ist ein Beispiel für eine solche Vorrichtung. Ein solches Computersystem umfasst zumindest eine Verarbeitungseinheit in Form von oder nach Art eines Mikroprozessors sowie einen Speicher, in den ein Computerprogramm mit einer Implementierung des Verfahrens oder spezieller Ausführungsformen des Verfahrens geladen ist. Das Computerprogramm wird beim Betrieb des Computersystems zwecks einer automatischen Bewertung zumindest einer mechatronischen Kenngröße einer Produktions- oder Werkzeugmaschine gemäß dem hier vorgestellten Ansatz ausgeführt.

Indem das im Folgenden beschriebene Verfahren zur automatischen Ausführung in Form eines Computerprogramms realisiert ist, ist die Erfindung einerseits auch ein solches Computerprogramm mit durch ein Computersystem ausführbaren Programmcodeanweisungen und andererseits ein Speichermedium mit einem derartigen Computerprogramm, also ein Computerprogrammprodukt mit Programmcodemitteln, sowie schließlich auch ein Computersystem, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementierung eines Verfahrens in Software stets auch eine Implementierung in Firmware oder in Firm- und Software oder in Firm- und Hardware möglich ist. Daher soll für die hier vorgelegte Beschreibung gelten, dass von den Begriffen Software und Computerprogramm auch andere Implementierungsmöglichkeiten, nämlich insbesondere eine Implementierung in Firmware oder in Firm- und Software oder in Firm- und Hardware, umfasst sind.

Optional umfasst das Computersystem in der sogenannten Cloud erreichbare Mittel zur Ausführung des Verfahrens oder spezieller Ausführungsformen des Verfahrens. Beispiele für in der Cloud erreichbare Mittel des Computersystems sind ein in den Speicher des Computersystems geladenes Computerprogramm der oben skizzierten Art. Gegebenenfalls handelt es sich dabei auch um ein oder mehrere verteilte Computerprogramme. Das Computerprogramm oder die Computerprogramme fungiert bzw. fungieren als in der Cloud erreichbare Software-Dienste, welche im Zusammenhang mit der Ausführung des hier vorgeschlagenen Verfahrens oder im Rahmen von Ausführungsformen des Verfahrens aufgerufen und ausgeführt werden. Bevorzugt ist auch die im Rahmen des Verfahrens oder im Rahmen von Ausführungsformen des Verfahrens genutzte Datenbasis eine in der Cloud vorgehaltene Datenbasis, insbesondere eine verteilte Datenbasis in der Cloud. Dann umfasst das Computersystem auch Mittel zum Zugriff auf die in der Cloud erreichbare Datenbasis, also entsprechende Programmfunktionen zum Zugriff auf eine ggf. entfernte und nur unter Verwendung grundsätzlich an sich bekannter Datenübertragungsfunktionen erreichbare Datenbasis.

Vorteilhafte Ausgestaltungen des Computersystems ergeben sich aus einer Umsetzung einzelner oder mehrerer Merkmale des Anspruchs 1 und der darauf rückbezogenen Ansprüche. Entsprechend gelten Merkmale und Details, die im Zusammenhang mit dem gegenständlichen Verfahren zur Bewertung zumindest einer mechatronischen Kenngröße und dessen Ausgestaltungen beschrieben sind, selbstverständlich auch im Zusammenhang mit und im Hinblick auf die zur Durchführung des Verfahrens bestimmte Vorrichtung, insbesondere ein Computersystem der oben skizzierten Art, und jeweils umgekehrt, so dass bezüglich der Offenbarung zu den einzelnen Aspekten der Erfindung stets wechselseitig Bezug genommen wird bzw. werden kann. Entsprechend kann das gegenständliche Verfahren auch mittels einzelner oder mehrerer Verfahrensmerkmale fortgebildet sein kann, die sich auf von der Vorrichtung oder dem Computersystem ausgeführte Verfahrensschritte beziehen. Genauso kann die gegenständliche Vorrichtung, insbesondere ein Computersystem, auch durch zur Ausführung von im Rahmen des Verfahrens ausgeführten Verfahrensschritten bestimmte und eingerichtete Mittel fortgebildet sein.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens zur Bewertung einer Bewertungsgröße umfasst die Datenbasis für eine Mehrzahl von Maschinen (Produktions- oder Werkzeugmaschinen) jeweils einen Maschinendatensatz, wobei im Zusammenhang mit einer Ausführung eines Steuerungsprogramms erfasste Messwerte in einem der jeweiligen Maschine zugeordneten Maschinendatensatz gespeichert werden. Dies erleichtert die Zuordnung der erfassten Messwerte zu einer Maschine und schließlich auch die Bewertung einer Bewertungsgröße in Relation zu einer Vergleichsgröße, denn zumindest die oder jede Vergleichsgröße wird auf Basis eines Maschinendatensatzes oder auf Basis von Daten innerhalb eines Maschinendatensatzes ermittelt.

Bei einer weiteren Ausführungsform des Verfahrens zur Bewertung einer Bewertungsgröße wird ein jeweils einer Produktions- oder Werkzeugmaschine zugeordneter Maschinendatensatz automatisch erzeugt, wenn erstmals Maschinendaten, welche die jeweilige Produktions- oder Werkzeugmaschine beschreiben, an die Datenbasis übermittelt werden. Der Maschinendatensatz muss demnach nicht manuell angelegt werden. Vielmehr entsteht dieser gewissermaßen automatisch, wenn erstmalig bisher unbekannte Maschinendaten in die Datenbasis eingehen.

Bei einer nochmals weiteren Ausführungsform des Verfahrens zur Bewertung einer Bewertungsgröße wird das oder jedes zur Erfassung jeweils zumindest einer mechatronischen Kenngröße bestimmte Steuerungsprogramm automatisch und unter Berücksichtigung desjenigen Maschinendatensatzes generiert, der zu der Maschine gehört, auf der das Steuerungsprogramm ausgeführt werden soll. Dies gewährleistet, dass jedes Steuerungsprogramm zu der jeweiligen Maschine passt. Dies bedeutet einerseits, dass das Steuerungsprogramm auf der jeweiligen Maschine ausgeführt werden kann. Andererseits bedeutet dies auch, dass das Steuerungsprogramm bei dessen Ausführung auf der jeweiligen Maschine optimal dafür ausgelegt ist, um dort eine zum Ermitteln einer oder mehrerer mechatronischer Kenngrößen günstige Anregung zumindest einer Maschinenachse der Maschine zu bewirken.

Eine besonders gute Vergleichbarkeit der mechatronischen Kenngrößen, also insbesondere eine Bewertung einer Bewertungsgröße in Bezug auf eine Vergleichsgröße, ist gegeben, wenn die zumindest eine zu bewertende mechatronische Kenngröße und die bei der Bewertung betrachteten anderen mechatronischen Kenngrößen jeweils das Ergebnis einer Ausführung automatisch erzeugter, gleicher oder zumindest gleichartiger Steuerungsprogramme sind. Aufgrund solcher gleicher oder gleichartiger Steuerungsprogramme ergeben sich die als Basis für zumindest eine mechatronische Kenngröße erfassten Messwerte. Die gleichen oder gleichartigen zugrunde liegenden Steuerungsprogramme machen auch die Messwerte und die oder jede resultierende mechatronische Kenngröße optimal vergleichbar.

Bei einer nochmals weiteren Ausführungsform des Verfahrens ist vorgesehen, dass ein für eine Produktions- oder Werkzeugmaschine bestimmtes Steuerungsprogramm der oben skizzierten Art regelmäßig oder zu vorgegebenen oder vorgebbaren Zeitpunkten ausgeführt wird und dass eine dabei ermittelte Bewertungsgröße automatisch und im Zusammenhang mit der automatischen Ausführung des Steuerungsprogramms, zum Beispiel nach der Ausführung des Steuerungsprogramms, insbesondere unmittelbar nach der Ausführung des Steuerungsprogramms, in Bezug auf eine Vergleichsgröße bewertet wird. Die regelmäßige Ausführung des Steuerungsprogramms und in Verbindung damit die regelmäßige Bewertung einer Bewertungsgröße stellt eine effiziente Form einer regelmäßigen Überwachung der jeweiligen Maschine oder einer Maschinenachse der Maschine dar. Solange sich zum Beispiel keine statistisch signifikante Abweichung der Bewertungsgröße von der Vergleichsgröße ergibt, kann davon ausgegangen werden, dass die Maschine oder die jeweilige Achse ordnungsgemäß funktioniert und dass diese Funktion zumindest auch in näherer Zukunft gewährleistet ist. Wenn sich bei einer solchen regelmäßigen Überwachung mit der Zeit größere Abweichungen zu der Vergleichsgröße einstellen, kann dies als Indiz für bevorstehende Funktionsstörungen ausgewertet werden. Dabei kann zum Beispiel der zeitliche Verlauf solcher Abweichungen betrachtet werden. Mittels einer Interpolation kann damit grundsätzlich auch eine Vorhersage in Bezug auf einen wahrscheinlichen Ausfall der Maschine oder der jeweiligen Achse getroffen werden.

Bei einer vorteilhaften Ausführungsform des Verfahrens zur Bewertung zumindest einer mechatronischen Kenngröße ist vorgesehen, dass als Ergebnis der Bewertung der zumindest einen mechatronischen Kenngröße automatisch eine Meldung erzeugt wird, welche automatisch an diejenige Produktions- oder Werkzeugmaschine oder deren Betreiber übermittelt wird, von der die zu bewertende mechatronische Kenngröße stammt oder auf deren Messwerte die zu bewertende mechatronische Kenngröße zurückgeht. Dies gewährleistet, dass die im Rahmen des hier vorgeschlagenen Verfahrens ermittelten Ergebnisse dort zur Verfügung stehen, wo diese benötigt werden. Der Betreiber einer Maschine kann aufgrund einer solchen Meldung zum Beispiel Wartungs- oder Instandhaltungsmaßnahmen vorsehen oder einplanen. Bei einer maschinenlesbaren Meldung kann die Maschine automatische Aktionen entsprechend dem Inhalt der Meldung auslösen und zum Beispiel einen Alarm generieren und/oder ein Betriebsprotokoll oder dergleichen um einen Hinweis auf in Zukunft notwendige Wartungs- oder Instandhaltungsmaßnahmen ergänzen.

Insgesamt wird mit dem hier vorgeschlagenen Verfahren zur Bewertung zumindest einer mechatronischen Kenngröße im Rahmen der Bewertung der zumindest einen mechatronischen Kenngröße ein Zustand derjenigen Produktions- oder Werkzeugmaschine, von der die zu bewertende mechatronische Kenngröße stammt oder auf deren Messwerte die zu bewertende mechatronische Kenngröße zurückgeht, ermittelt. Optional wird im Rahmen der Bewertung der zumindest einen mechatronischen Kenngröße eine Ausfallprognose bezüglich derjenigen Produktions- oder Werkzeugmaschine, von der die zu bewertende mechatronische Kenngröße stammt oder auf deren Messwerte die zu bewertende mechatronische Kenngröße zurückgeht, ermittelt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Verfahrprofil einer Maschinenachse einer Produktions- oder Werkzeugmaschine,
- FIG 2: eine Steifigkeit - als Beispiel für eine mechatronische Kenngröße - eines Antriebsstrangs einer Maschinenachse über einem aufgrund eines Verfahrprofils gemäß FIG 1 resultierenden Verfahrweg,
- FIG 3 und FIG 4: eine Datenbasis mit Maschinendatensätzen bezüglich einer Mehrzahl von Produktions- oder Werkzeugmaschinen,
- FIG 5: aufgrund der Maschinendatensätze resultierende Steuerungsprogramme für einzelne Produktions- oder Werkzeugmaschinen,

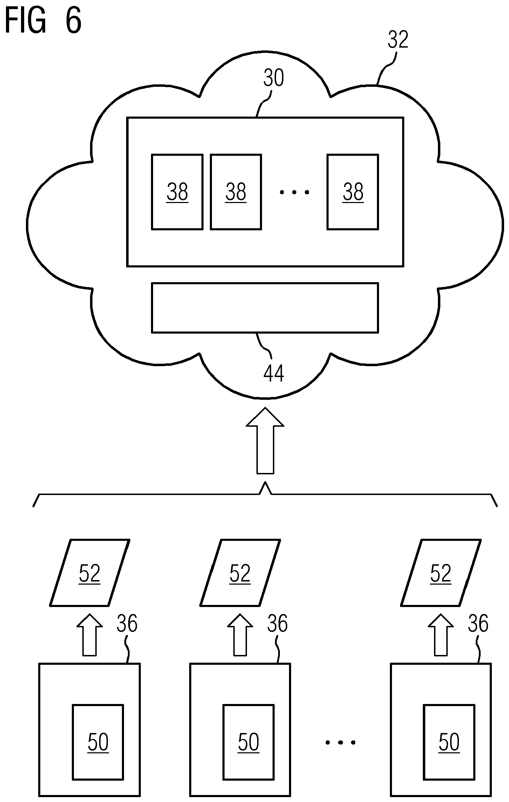

- FIG 6: bei einer Ausführung eines Steuerungsprogramms durch eine Produktions- oder Werkzeugmaschine resultierende Messwerte und deren Übermittlung in die Datenbasis, nämlich in die Maschinendatensätze in der Datenbasis,
- FIG 7: eine Bewertung von aufgrund der aufgenommenen Messwerte resultierenden mechatronischen Kenngrößen, sowie
- FIG 8: ein Computersystem als Beispiel für eine Vorrichtung zur Ausführung des hier vorgeschlagenen Verfahrens.

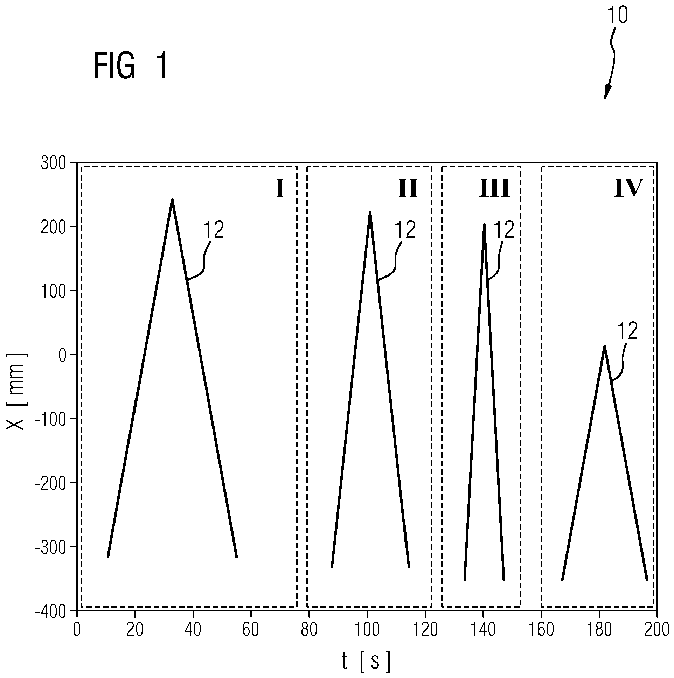

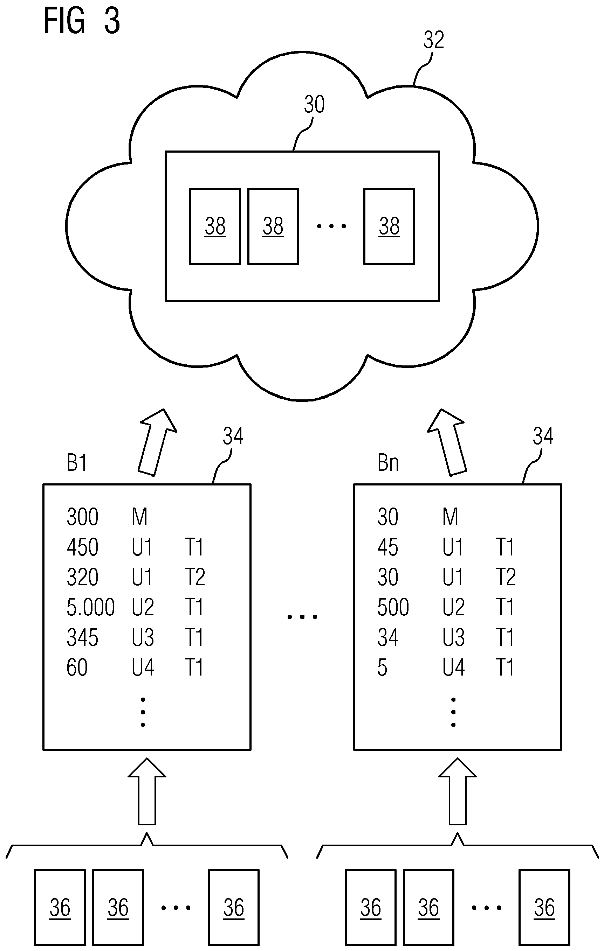

Die Darstellung in FIG 1 zeigt exemplarisch ein Verfahrprofil 10 einer Vorschubachse einer selbst nicht gezeigten, an sich bekannten und grundsätzlich beliebigen Produktions- oder Werkzeugmaschine 36 (FIG 3), insbesondere einer solchen Maschine in Form einer Werkzeugmaschine, eines Industrieroboters und dergleichen (wie eingangs genannt). Das Verfahrprofil 10 umfasst zwecks Bestimmung oder Auswertung mechatronischer Kenngrößen der jeweiligen Vorschubachse der Produktions- oder Werkzeugmaschine einzelne Messfahrten 12.

Solche Verfahrprofile 10 werden derzeit allenfalls manuell erstellt. Einzelne Abschnitte des Verfahrprofils 10 bilden mit den dortigen jeweiligen Messfahrten 12 die Basis für eine Ermittlung unterschiedlicher mechatronischer Kenngrößen der bei der Messfahrt 12 bewegten Vorschubachse oder Vorschubachsen. Beim in FIG 1 gezeigten Beispiel umfasst das Verfahrprofil 10 eine Mehrzahl von Abschnitten (I, II, III, IV), wobei in jedem Abschnitt eine Messfahrt 12 oder Messfahrten 12 zur Bestimmung einer mechatronischen Kenngröße oder im Wesentlichen einer mechatronischen Kenngröße erfolgen. Die Darstellung der gezeigten Messfahrten 12 ist ausschließlich beispielhaft zu verstehen und insoweit zeigt die Darstellung in jedem Abschnitt nur einen "Hinweg" (Plusfahrt) und einen "Rückweg" (Minusfahrt) der jeweiligen Vorschubachse.

Bei der in FIG 1 gezeigten Situation umfasst das Verfahrprofil 10 exemplarisch vier Abschnitte. Grundsätzlich kann ein zur Ermittlung mechatronischer Kenngrößen bestimmtes Verfahrprofil 10 mehr oder weniger als vier Abschnitte umfassen. Bevorzugt umfasst das Verfahrprofil 10 für jede zu ermittelnde mechatronische Kenngröße einen Abschnitt, nämlich einen Abschnitt, in welchem mittels der dort definierten Messfahrt 12 oder der dort definierten Messfahrten 12 eine zur Ermittlung der jeweiligen mechatronischen Kenngröße besonders günstige Anregung der jeweiligen Vorschubachse erfolgt.

Bei den zu ermittelnden mechatronischen Kenngrößen handelt es sich insbesondere um die Kenngröße "Reibung", die Kenngröße "Steifigkeit" und die Kenngröße "Lose". Eine optionale weitere mechatronische Kenngröße beschreibt einen Fehler in einem Kugelgewindetrieb (KGT).

Im Folgenden werden im Interesse einer besseren Lesbarkeit der nachfolgenden Beschreibung eine Produktions- oder Werkzeugmaschine der eingangs genannten Art kurz als Maschine und eine Vorschubachse einer solchen Maschine kurz als Achse oder alternativ als Maschinenachse bezeichnet.

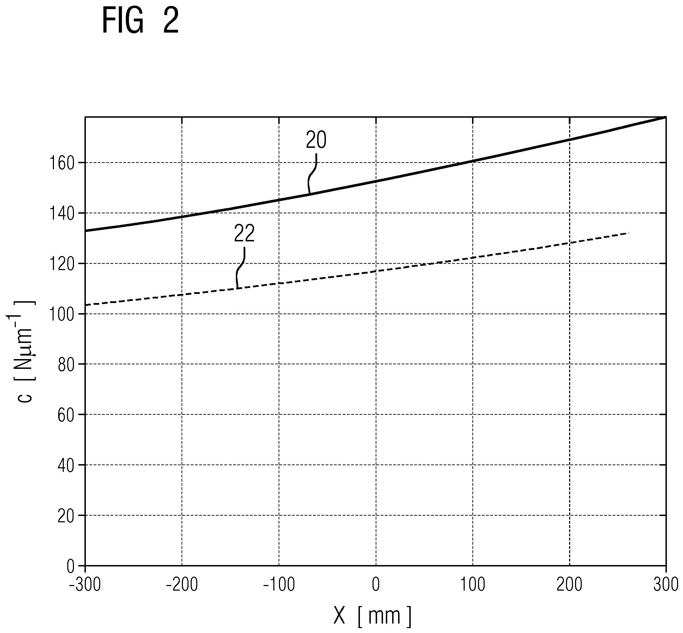

Die Darstellung in FIG 2 zeigt Steifigkeitsverläufe 20, 22 einer Fahrt 20, 22 zweier Maschinen (Produktions- oder Werkzeugmaschinen) oder zweier Achsen solcher Maschinen in einem Koordinatensystem, in dem auf der Abszisse der Verfahrweg *X1* (in Millimetern) und auf der Ordinate die Steifigkeit c des jeweiligen Antriebsstrangs (in Newton pro Mikrometer; N/µm) abgetragen ist. Die Steifigkeitsverläufe 20, 22 (erster Steifigkeitsverlauf 20; zweiter Steifigkeitsverlauf 22) resultieren aufgrund einer in einem Verfahrprofil 10 gemäß FIG 1 definierten Messfahrt 12. Der erste Steifigkeitsverlauf 20 gehört zu einer ersten Maschine. Der zweite Steifigkeitsverlauf 22 gehört zu einer zweiten Maschine. Grundsätzlich würde man bei zwei gleichen Maschinen/gleichen Achsen einen gleichen oder zumindest im Wesentlichen gleichen Verlauf erwarten. Aufgrund der dargestellten Steifigkeitsverläufe 20, 22 ergibt sich, dass die zweite Maschine deutlich weicher ist die erste Maschine. Diese könnte auf eine weichere Spindelmutter hindeuten oder eine größere Lose. Insgesamt soll dieses Beispiel verdeutlichen, dass Maschinen der eingangs genannten Art durch Vergleich der mechatronischen Kenngrößen, also zum Beispiel der Steifigkeit, vergleichbar sind.

Ein mittels einer Antriebssteuerung einer Maschine (Produktions- oder Werkzeugmaschine) ausführbares Steuerungsprogramm, welches eine Bewegung/ein Verfahrprofil 10 wie in FIG 1 oder eine ähnliche Bewegung/ein ähnliches Verfahrprofil 10 definiert, kann grundsätzlich mit jeder Maschine ausgeführt werden. Das Steuerungsprogramm ist dabei weder vom Hersteller der Maschine oder vom Hersteller einer Antriebssteuerung der Maschine noch von einem Softwarestand der Antriebssteuerung oder dergleichen abhängig.

Diese grundsätzliche Unabhängigkeit von einem Maschinenhersteller, Maschinentyp, einer Maschinensteuerungssoftware, einer Softwareversion usw. macht es möglich, eine Datenbasis 30 (FIG 3) zu erstellen, anhand derer zum Beispiel ein Zusammenhang zwischen mechatronischen Kenngrößen und Ausfällen einer Maschinenachse oder dergleichen herstellbar ist.

Die Darstellung in FIG 3 zeigt schematisch vereinfacht die erwähnte Datenbasis 30. Diese wird zum Beispiel in der sogenannten Cloud 32 vorgehalten. Die Daten in der Datenbasis 30 ergeben sich aufgrund der bei unterschiedlichen Maschinenbetreibern (symbolisch mit B1 .. Bn bezeichnet) bezüglich der dort in Betrieb oder in Gebrauch befindlichen Maschinen 36 (Produktions- oder Werkzeugmaschinen) erhobenen oder von unterschiedlichen Maschinenbetreibern zur Verfügung gestellten Maschinendaten 34.

Die symbolische Darstellung der Maschinendaten 34 in FIG 3 ist wie folgt zu lesen: Eine jeweils vorangestellte Zahl repräsentiert eine Anzahl. Die Zahlen sind ausdrücklich nur als Beispiele zu verstehen. Die Kennung "M" steht für "Maschine(n)", so dass zum Beispiel die Angabe "300 M" bedeutet, dass der Betreiber M1 insgesamt dreihundert Maschinen 36 (Produktions- oder Werkzeugmaschinen) betreibt. Die Kennung "U" steht beispielsweise für eine Maschineneinheit (unit) und eine nachgestellte Zahl unterscheidet unterschiedliche Maschineneinheiten. Die Kennung "U1" steht beispielsweise für einen Kugelgewindetrieb, die Kennung "U2" exemplarisch für Führungsschuhe, die Kennung "U3" exemplarisch für Getriebe und die Kennung "U4" exemplarisch für Lineardirektantrieb. Gleichartige Maschineneinheiten unterschiedlicher Typen und/oder unterschiedlicher Hersteller werden symbolisch mittels der Kennung "T" und einer nachgestellten Ziffer unterschieden.

Es ist darauf hinzuweisen, dass eine solche Struktur der Maschinendaten 34 nur eine beispielhafte Angabe darstellt und im Rahmen der hier vorgelegten Patentanmeldung vor allem spätere Übersetzungen von ansonsten in den Figuren aufscheinenden Texten vermeiden soll. Bei einer konkreten Umsetzung der hier vorgeschlagenen Neuerung spricht nichts dagegen, dass die Maschinendaten 34 die Angaben zu den Maschineneinheiten im Klartext, also zum Beispiel anstelle der Kennung "U1" den Text "Kugelgewindetrieb", umfassen. Entsprechendes gilt für Typen- und/oder Herstellerangaben.

Die Darstellung in FIG 3 soll veranschaulichen, dass aufgrund der Verwendung von Maschinendaten 34 von einer Vielzahl von Betreibern (B1 .. Bn) eine entsprechend umfangreiche Datenbasis 30 resultiert, welche jedenfalls mehr Daten umfasst, als bei einem einzelnen Maschinenbetreiber ermittelt werden können. Beim dargestellten Beispiel werden zum Beispiel Daten von zumindest dreihundertdreißig Maschinen ("M") erfasst, während jeder einzelne Maschinenbetreiber nur über Daten für dreihundert bzw. dreißig Maschinen 36 verfügt. Selbstverständlich steigt mit der Anzahl der Maschinenbetreiber der Umfang der Datenbasis 30.

Aufgrund der Maschinendaten 34 entsteht in der Datenbasis 30 für jede Maschine 36 ein der jeweiligen Maschine 36 eindeutig zugeordneter Maschinendatensatz 38.

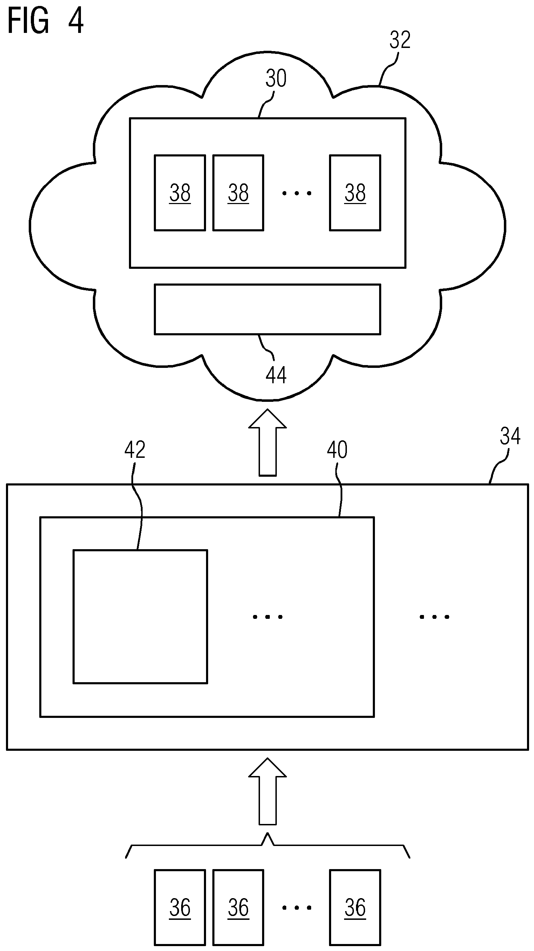

Die Darstellung in FIG 4 zeigt exemplarisch und schematisch stark vereinfacht weitere Einzelheiten bezüglich der von einem Maschinenbetreiber in die Datenbasis 30 übermittelbaren Maschinendaten 34. Demnach umfassen die Maschinendaten 34 zumindest eine Beschreibung einer Maschine 36 (Maschinenbeschreibung 40) und die Maschinenbeschreibung 40 selbst umfasst zumindest eine Beschreibung einer von der jeweiligen Maschine 36 umfassten Achse (Achsbeschreibung 42). Die Maschinenbeschreibung 40 definiert wesentliche Eigenschaften der jeweiligen Maschine 36 (Produktions- oder Werkzeugmaschine). Zwei Bespiele für jeweils eine Maschinenbeschreibung 40 in einer Klartextform sind nachfolgend einkopiert:
Maschine 1_1
   X-Achse mit KGT
   Y-Achse mit Zahnstange
   Z-Achse mit Direktantrieb
Maschine 1_n
   X-Achse mit Direktantrieb
   Y-Achse mit Riemen
   Z-Achse mit Zahnstange

Die sich auf jeweils eine Maschinenachse beziehenden Elemente einer Maschinenbeschreibung 40 - im vorliegenden Beispiel "X-Achse mit KGT" usw. - sind jeweils Beispiele für eine Achsbeschreibung 42. Im Rahmen der Achsbeschreibung 42 wird zumindest die Kinematik der jeweiligen Achse definiert. Eine Achsbeschreibung 42 kann des Weiteren Grenzwerte zu einem Bewegungsbereich der jeweiligen Achse sowie zum Beispiel Daten zur maximal möglichen Geschwindigkeit und/oder maximal möglichen Beschleunigung umfassen.

Mit der Bereitstellung solcher Maschinendaten 34 und deren Übernahme in die Datenbasis 30 sowie in die dortigen Maschinendatensätze 38 werden die einzelnen Maschinen 36 und deren Kinematik bekannt gemacht und es entsteht ein Grundgerüst für ein in der Datenbasis 30 vorgehaltenes Datenarchiv. Mittels einer eindeutigen Kennung - im obigen Beispiel "1_1" und "1_n" - ist jede Maschine 36 innerhalb der Gesamtheit aller von der Datenbasis 30 erfassten Maschinen 36 identifizierbar.

Gegebenenfalls erfolgt zu dem Zweck, eine solche eindeutige Identifizierbarkeit sicher gewährleisten zu können, im Rahmen einer erstmaligen Übermittlung einer Maschinenbeschreibung 40 an die Datenbasis 30 eine Generierung einer solchen eindeutigen Kennung, eine Übermittlung dieser eindeutigen Kennung zurück an den Sender der Maschinenbeschreibung 40 und eine Übernahme der Maschinenbeschreibung 40 in die Datenbasis 30 unter der generierten eindeutigen Kennung. Dies erfolgt beispielsweise mittels einer Zugangssoftware 44, insbesondere einer in der Cloud 32 als Cloud-Dienst ablaufenden Zugangssoftware 44, die allgemein den Empfang von an die Datenbasis 30 gesendeten Maschinendaten 34 überwacht und verwaltet und die Übernahme von an die Datenbasis 30 gesendeten Maschinendaten 34 in die Datenbasis 30 veranlasst.

Mit der Maschinenbeschreibung 40 und der oder jeder davon umfassten Achsbeschreibung 42 ist implizit festgelegt, welche mechatronische Kenngröße oder welche mechatronischen Kenngrößen bei einer jeweiligen Achse ermittelt werden können und/oder überwacht werden sollen. Bei einem Kugelgewindetrieb wären dies beispielsweise die Ordnungen beim Gleichlauf, die sich aus einer Überrollfrequenz der Spindelmutter, einer Überrollfrequenz der Spindel und einer Rotationsfrequenz der Kugeln ergeben. Mit der Übernahme einer Maschinenbeschreibung 40 in einen jeweiligen Maschinendatensatz 38 in der Datenbasis 30 ist demnach auf Seiten der Datenbasis 30 bekannt, welche mechatronischen Kenngrößen überwacht werden sollen.

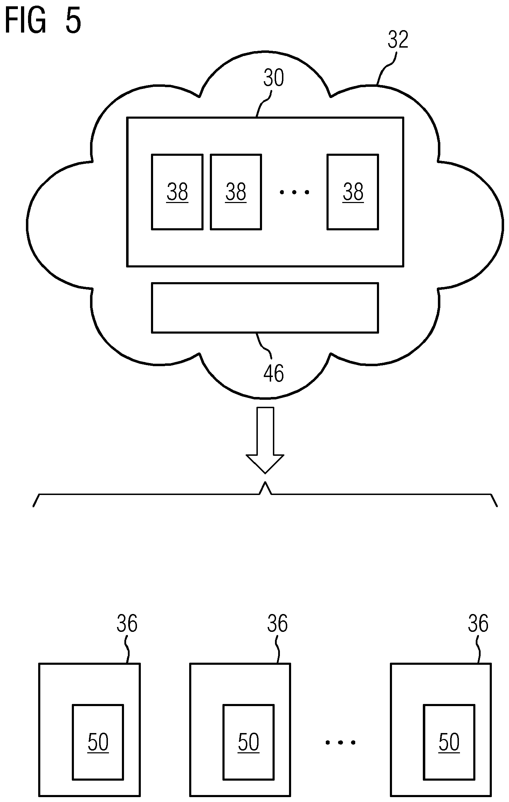

Auf Basis der Maschinendaten 34 werden automatisch mittels einer Steuerungsprogrammerzeugungssoftware 46 (FIG 5), insbesondere mittels einer in der Cloud 32 als Cloud-Dienst ablaufenden Steuerungsprogrammerzeugungssoftware 46, Steuerungsprogramme 50, insbesondere Steuerungsprogramme 50 in Form von NC-Programmen, für eine Maschine 36 oder eine Mehrzahl von Maschinen 36 generiert. Bezüglich der Generierung eines Steuerungsprogramms 50 wird auf die parallele Anmeldung mit dem Titel "Verfahren und Vorrichtung zur automatischen Generierung eines ausschließlich für Diagnosezwecke bestimmten Steuerungsprogramms für eine Produktions- oder Werkzeugmaschine" (internes Aktenzeichen der Anmelderin: 201625396) verwiesen. Der Inhalt dieser parallelen Anmeldung wird hiermit ebenfalls vollinhaltlich in die hier vorgelegte Beschreibung mit einbezogen, auch zu dem Zwecke, in dieser parallelen Anmeldung beschriebene Merkmale in Ansprüche zur Definition der der hier vorgelegten Beschreibung zugrunde liegenden Erfindung aufzunehmen.

Ein automatisch generiertes Steuerungsprogramm 50 umfasst ein Verfahrprofil 10 gemäß FIG 1. Das Verfahrprofil 10 ist nur für Diagnosezwecke bestimmt und zum Beispiel nicht zur Fertigung oder Bearbeitung eines Werkstücks. Die automatische Generierung eines Steuerungsprogramms 50 erfolgt mit dem Fokus, dass bei Ausführung des Steuerungsprogramms 50 auf der jeweiligen Maschine 36 die Achse, einzelne Achsen oder alle Achsen der Maschine 36 in einer Art und Weise angesteuert werden, die eine möglichst gute Anregung der jeweiligen Achse im Hinblick auf eine Erfassung von Messwerten zur Ermittlung mechatronischer Kenngrößen ermöglicht.

Während der Ausführung eines solchen automatisch generierten Steuerungsprogramms 50 erfolgt an der Maschine 36 und/oder der jeweiligen Achse mittels grundsätzlich an sich bekannter Sensorik eine Messwertermittlung. Die Messwertermittlung erfolgt zum Beispiel mittels eines Lagegebers am Antriebsmotor der Achse oder durch Auslesen von in einem Antriebssystem oder dessen Antriebssteuerung ohnehin erfassten oder ermittelten Daten (Lage, Geschwindigkeit, Beschleunigung, Drehmoment, Spannungen, Ströme usw.). Die dabei erfassten und/oder ermittelten Daten werden im Folgenden - auch zur Unterscheidung von den Maschinendaten 34 - zusammenfassend, aber ohne Verzicht auf eine weitergehende Allgemeingültigkeit, als Messwerte 52 bezeichnet und insoweit gelten auch rein numerisch ermittelte Daten als Messwerte. Die Messwerte 54 werden an die Datenbasis 30 übermittelt und zum Beispiel mittels der Zugangssoftware 44 und unter Verwendung der jeweiligen Kennung einer Maschine 36 einem mit derselben Kennung ausgezeichneten Maschinendatensatz 38 in der Datenbasis 30 zugeordnet.

Maschinenbetreiber können solche Messwerte 52 zu grundsätzlich beliebigen Zeitpunkten, aber zum Beispiel auch wiederholt, zum Beispiel in regelmäßigen Abständen (monatlich, vierteljährlich usw.), an die Datenbasis 30 zur Ergänzung der dortigen Maschinendatensätze 38 übermitteln. Zum Erhalt und/oder zur Aktualisierung der Messwerte 52 führt ein Maschinenbetreiber auf seinen Maschinen 36 oder einzelnen Maschinen 36 ein Steuerungsprogramm 50 der oben genannten Art mit einem Verfahrprofil 10 gemäß FIG 1 aus, wobei das Steuerungsprogramm 50 - wie oben skizziert - zur Ermittlung der Messwerte 52 speziell an die Maschine 36 angepasst ist. Während der aufgrund der Ausführung des Steuerungsprogramms 50 resultierenden Bewegung der Maschinenachse, einzelner Maschinenachsen oder aller Maschinenachsen der jeweiligen Maschine 36 werden die Messwerte 52 erfasst oder ermittelt. Dabei kann auch eine zum Beispiel regelmäßige Ausführung solcher Steuerungsprogramme 50 automatisiert sein, zum Beispiel derart, dass die Ausführung eines Steuerungsprogramms 50 automatisch eingeplant wird und zu einem zu dessen Ausführung geeigneten Zeitpunkt automatisch ausgelöst wird.

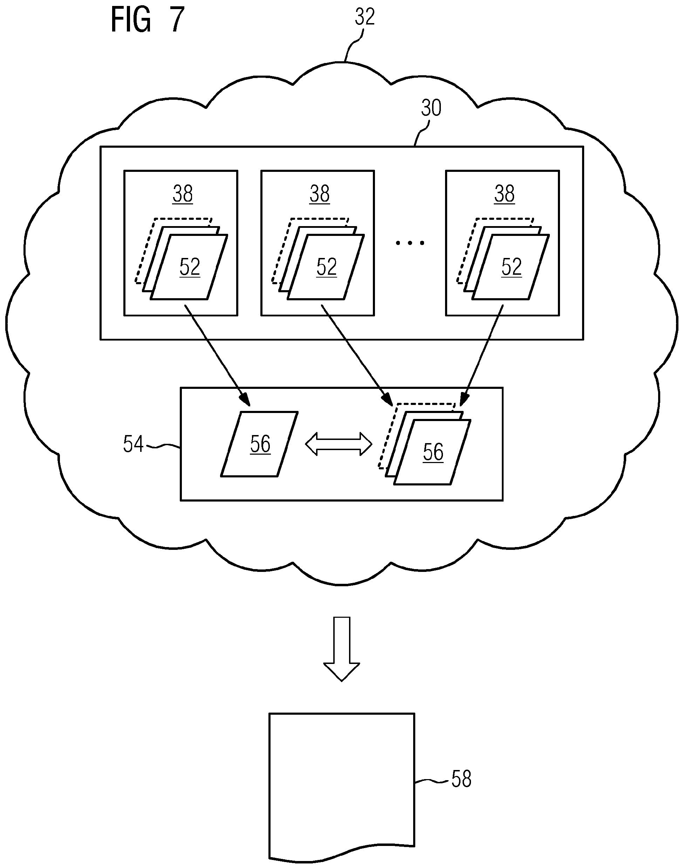

Während oder im Anschluss an die Ausführung des Steuerungsprogramms 50 oder im Zusammenhang mit dem Ende der Ausführung des Steuerungsprogramms 50 werden die jeweiligen Messwerte 52 an die Datenbasis 30 übermittelt. Dort können die von einer Vielzahl von Maschinen 36 stammenden Messwerte 52 und/oder zu unterschiedlichen Zeitpunkten in Bezug auf dieselben Maschine 36 aufgenommene Messwerte 52 oder die jeweils resultierenden mechatronischen Kenngrößen 56 mittels einer Auswertungssoftware 54 (FIG 7), insbesondere einer in der Cloud 32 als Cloud-Dienst ablaufenden Auswertungssoftware 54, analysiert und bewertet oder in einer sonst geeigneten Art und Weise be- und/oder verarbeitet werden. Als Ergebnis wird zum Beispiel eine Meldung 58 erzeugt, welche entweder an den Betreiber der jeweiligen Maschine 36 oder an die Maschine 36 selbst übermittelt wird und dann dort durch den Maschinenbetreiber ausgelesen werden kann.

Für die Auslegung der hier vorgelegten Beschreibung ist darauf hinzuweisen, dass die Begriffe mechatronische Kenngröße 56 einerseits und Messwerte 52 andererseits zumindest zum Teil Synonyme sind. Die Messwerte 52 oder einzelne Messwerte 52 sind die Basis für eine mechatronische Kenngröße 56. In der Datenbasis 30 kann eine ermittelte mechatronische Kenngröße 56 gespeichert sein und die zugrunde liegenden Messwerte 52 können damit grundsätzlich in der Datenbasis 30 gelöscht werden. Genauso kann eine jeweils benötigte mechatronische Kenngröße 56 jeweils aufgrund der zugrunde liegenden Messwerte 52 ermittelt werden und insoweit ggf. auch mehrfach ermittelt werden. Welche Form gewählt wird, ist implementierungsabhängig und ohne Einfluss auf die Funktion und den Erfolg des hier vorgeschlagenen Verfahrens. Die Gesamtheit der Messwerte 52 eines Maschinendatensatzes 38 kann allerdings die Basis für mehrere mechatronische Kenngrößen 56 bilden. Dann ist keine unmittelbare Entsprechung der Begriffe Messwerte 52 und mechatronische Kenngröße 56 (Singular) gegeben. Die Entsprechung besteht aber in Bezug auf Messwerte 52 einerseits und mechatronische Kenngrößen 56 (Plural) fort.

Die Zugangssoftware 44, die Steuerungsprogrammerzeugungssoftware 46 und die Auswertungssoftware 54 können zu einem Computerprogramm zusammengefasst sein und stellen dann das eingangs als Mittel zur Ausführung des hier vorgestellten Verfahrens genannte Computerprogramm dar. Diese kann auch - wie erwähnt - als verteiltes Computerprogramm ausgeführt sein, so dass sich zum Beispiel einzelne Computerprogramme ergeben, von denen eines die Zugangssoftware 44, ein anderes die Steuerungsprogrammerzeugungssoftware 46 und ein nochmals anderes die Auswertungssoftware 54 darstellt. Ebenfalls sind beliebige Zusammenfassungen möglich, derart, dass zum Beispiel die Zugangssoftware 44 und die Auswertungssoftware 54 zu einem Computerprogramm zusammengefasst sind und daneben die Steuerungsprogrammerzeugungssoftware 46 ein davon unabhängiges weiteres Computerprogramm darstellt. Des Weiteren können auch die Zugangssoftware 44, die Steuerungsprogrammerzeugungssoftware 46 und/oder die Auswertungssoftware 54 jeweils als verteilte Computerprogramme ausgeführt sein.

Mittels der Auswertungssoftware 54 sind zum Beispiel folgende Auswertungen möglich:
- Eine für eine Achse einer Maschine 36 ermittelte mechatronische Kenngröße 56 (Bewertungsgröße) kann mit anderen Kenngrößen 56 (Vergleichsgröße) verglichen werden, nämlich Kenngrößen 56, die für eine oder mehrere gleichartige oder vergleichbare Achsen einer anderen Maschine 36 oder anderer Maschinen 36 ermittelt wurden. Bei einem Vergleich einer Kenngröße 56 mit einer Mehrzahl anderer Kenngrößen 56 kommt zum Beispiel in Betracht, dass in Bezug auf diese Mehrzahl von Kenngrößen 56 ein Mittelwert, ein Maximalwert, ein Minimalwert oder dergleichen ermittelt wird und dass der Vergleich in Bezug darauf erfolgt. Bei einer Über- oder Unterschreitung kann automatisch als Bestandteil der Meldung 58 ein entsprechender Hinweis erzeugt werden. Bei dem automatisch erzeugten Hinweis handelt es sich bevorzugt um einen automatisch auswertbaren Hinweis, beispielsweise einen mittels der Systemsoftware der jeweiligen Maschine 36 auswertbaren Hinweis. Eine auf einen Vergleich einer Kenngröße 56 mit zumindest einer anderen Kenngröße 56 zurückgehende Meldung 58 kann die Kenngröße 56 einerseits und die oder jede für den Vergleich herangezogene Kenngröße 56 andererseits zum Beispiel in einer graphischen Darstellung umfassen, so dass die Lage der jeweiligen Kenngröße 56 in Relation zu der oder jeder anderen Kenngröße 56 leicht erfassbar ist.
- Eine für eine Achse einer Maschine 36 ermittelte mechatronische Kenngröße 56 (Bewertungsgröße) kann mit zumindest einer zeitlich früher ermittelten mechatronischen Kenngröße 56 (Vergleichsgröße) derselben Achse in Relation gesetzt werden, so dass sich ein Anhalt hinsichtlich der zeitlichen Entwicklung der Kenngröße 56 ergibt, also eine Tendenzinformation. Diese Tendenzinformation kann optional zusätzlich mit entsprechenden Tendenzinformationen von gleichen oder vergleichbaren Achsen einer anderen Maschine 36 oder anderer Maschinen 36 verglichen werden. Bei einem Vergleich einer Tendenzinformation mit einer Mehrzahl von Tendenzinformationen kommt zum Beispiel in Betracht, dass in Bezug auf diese Mehrzahl ein Mittelwert, ein Maximalwert, ein Minimalwert oder dergleichen ermittelt wird und dass der Vergleich in Bezug darauf erfolgt. Bei einer Über- oder Unterschreitung kann automatisch als Bestandteil der Meldung 58 ein entsprechender Hinweis erzeugt werden. Auch ein solcher Hinweis kann - wie oben beschrieben - automatisch auswertbar sein und zum Beispiel mittels der Systemsoftware der jeweiligen Maschine 36 ausgewertet werden. Auch hier kommt eine graphische Darstellung der oben beschriebenen Art in Betracht.
- Speziell wenn die im Rahmen einer Ausführung eines Steuerungsprogramms 50 ermittelten oder erfassten Messwerte 52 auch Fehlerinformationen umfassen oder Daten umfassen, die automatisch als Indiz für einen Fehler beim Betrieb der jeweiligen Maschine 36 auswertbar sind, ist eine automatische Generierung einer Ausfallwarnung möglich und eine solche wird bevorzugt im Rahmen der Meldung 58 an den Maschinenbetreiber und/oder an die jeweilige Maschine 36 übermittelt. Wenn eine Kenngröße 56 einer ersten Maschine 36 eine Kenngröße 56 einer anderen Maschine 36 über- oder unterschreitet, welche eine Fehlersituation darstellt oder zu einem Fehler geführt hat, ist davon auszugehen, dass auch bei der ersten Maschine 36 der bei der anderen Maschine 36 aufgetretene Fehler droht. Die Ausfallwarnung kann optional noch verbessert werden, indem nicht nur die Kenngröße 56 der anderen Maschine 36, die bereits zu einem Fehler geführt hat, überwacht wird, sondern auch ein vorgegebener oder vorgebbarer Toleranzbereich unter- oder oberhalb der Kenngröße 56.
- Weitere Auswertungen und Analysen oder kombinierte Auswertungen und Analysen sind auf Basis der oben beispielhaft erläuterten Auswertemöglichkeiten denkbar und sollen als von der hier vorgelegten Beschreibung umfasst gelten.

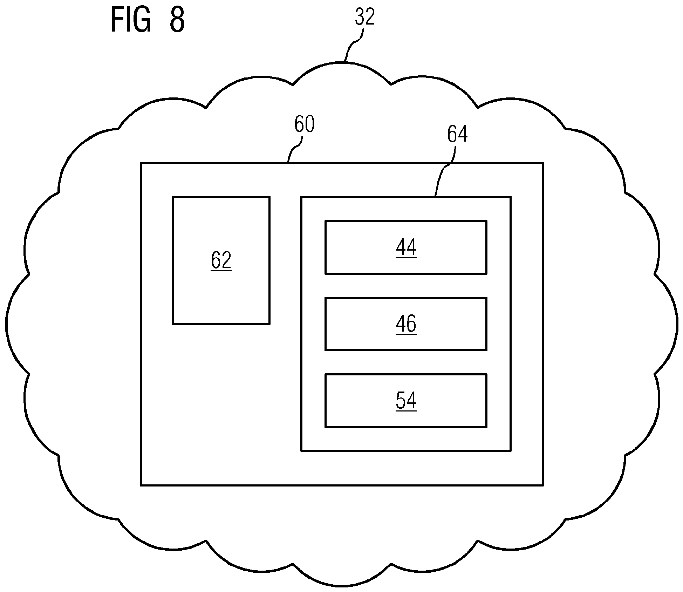

Die Darstellung in FIG 8 zeigt abschließend ein in der Cloud 32 erreichbares, gegebenenfalls auch verteiltes Computersystem 60, welches zur Ausführung des hier beschriebenen Verfahrens und gegebenenfalls einzelner oder mehrerer Ausführungsformen bestimmt und eingerichtet ist. Das Computersystem 60 umfasst in an sich bekannter Art und Weise zumindest eine Verarbeitungseinheit 62 in Form von oder nach Art eines Mikroprozessors sowie einen Speicher 64, in den beim Betrieb des Computersystem 60 die Zugangssoftware 44, die Steuerungsprogrammerzeugungssoftware 46 und die Auswertungssoftware 54 geladen sind. Die Zugangssoftware 44, die SteuerungsprogrammErzeugungssoftware 46 und/oder die Auswertungssoftware 54 können jeweils auch als ein in der Cloud 32 aufrufbarer Dienst realisiert sein. Der Zugriff auf das Computersystem 60 und die im Speicher 64 gespeicherte Software 44, 46, 54 erfolgt zum Beispiel über das Internet, insbesondere unter Verwendung an sich bekannter abgesicherter Verbindungen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Bewertung zumindest einer mechatronischen Kenngröße 56 einer Maschine 36 (Produktions- oder Werkzeugmaschine) sowie als Beispiel für eine nach dem Verfahren arbeitende Vorrichtung ein Computersystem 60 zur Bewertung zumindest einer solchen Kenngröße 56. Die Bewertung erfolgt, indem die zu bewertende Kenngröße 56 (Bewertungsgröße) mit zumindest einer vergleichbaren mechatronischen Kenngröße 56 (Vergleichsgröße) zumindest einer anderen Produktions- oder Werkzeugmaschine 36 in Beziehung gesetzt wird, zum Beispiel derart, dass geprüft wird, ob die Bewertungsgröße größer oder kleiner als die Vergleichsgröße ist oder in einem vorgegebenen oder vorgebbaren Bereich um die Vergleichsgröße liegt. Die betrachteten mechatronischen Kenngrößen 56 werden automatisch im Zuge einer Ausführung automatisch erstellter Steuerungsprogramme 50 ermittelt. Diese werden durch jeweils eine Produktions- oder Werkzeugmaschine 36 ausgeführt und sind speziell zur Ermittlung zumindest einer mechatronischen Kenngröße 56 bestimmt und eingerichtet, zum Beispiel derart, dass bei einer Ausführung eine gewünschte Anregung der Maschine 36 oder einer Maschinenachse erfolgt und auf Basis dieser Anregung die jeweilige mechatronische Kenngröße 56 oder Messwerte 52 zur Ermittlung zumindest einer mechatronischen Kenngröße 56 in einer besonders repräsentativen/charakteristischen Art und Weise ermittelbar ist bzw. sind.

## Patentansprüche

1. Verfahren zur Bewertung zumindest einer mechatronischen Kenngröße (56) einer Produktions- oder Werkzeugmaschine (36),
wobei die Bewertung der zumindest einen mechatronischen Kenngröße (56) erfolgt, indem diese mit zumindest einer vergleichbaren mechatronischen Kenngröße (56) zumindest einer anderen Produktions- oder Werkzeugmaschine (36) in Beziehung gesetzt wird,
wobei die bei der Bewertung betrachteten mechatronischen Kenngrößen (56) automatisch im Zuge einer Ausführung eines zur Ermittlung zumindest einer mechatronischen Kenngröße (56) bestimmten und durch eine Produktions- oder Werkzeugmaschine (36) ausgeführten Steuerungsprogramms (50) ermittelt werden,
wobei im Zusammenhang mit der Ausführung des Steuerungsprogramms (50) Messwerte (52) erfasst und in einer Datenbasis (30) gespeichert werden und
wobei auf Basis dieser Messwerte (52) die zumindest eine zu bewertende mechatronische Kenngröße (56) sowie die zumindest eine mechatronische Kenngröße (56), zu welcher die zu bewertende mechatronische Kenngröße (56) in Beziehung gesetzt wird, ermittelt werden.

2. Verfahren nach Anspruch 1,
wobei die Datenbasis (30) für eine Mehrzahl von Produktions- oder Werkzeugmaschinen (36) jeweils einen Maschinendatensatz (38) umfasst,
wobei im Zusammenhang mit einer Ausführung eines Steuerungsprogramms (50) erfasste Messwerte (52) in einem der jeweiligen Produktions- oder Werkzeugmaschine (36) zugeordneten Maschinendatensatz (38) gespeichert werden.

3. Verfahren nach Anspruch 2,
wobei ein jeweils einer Produktions- oder Werkzeugmaschine (36) zugeordneter Maschinendatensatz (38) automatisch erzeugt wird, wenn die jeweilige Produktions- oder Werkzeugmaschine (36) beschreibende Maschinendaten (34) an die Datenbasis (30) übermittelt werden.

4. Verfahren nach einem der Ansprüche 2 oder 3,
wobei die zur Erfassung jeweils zumindest einer mechatronischen Kenngröße (56) bestimmten Steuerungsprogramme (50) automatisch und unter Berücksichtigung der Maschinendatensätze (38) generiert werden.

5. Verfahren nach Anspruch 4, wobei die zumindest eine zu bewertende mechatronische Kenngröße (56) und die bei der Bewertung betrachteten anderen mechatronischen Kenngrößen (56) jeweils das Ergebnis einer Ausführung automatisch erzeugter, gleicher oder zumindest gleichartiger Steuerungsprogramme (50) sind.

6. Verfahren nach einem der vorangehenden Ansprüche,
wobei ein für eine Produktions- oder Werkzeugmaschine (36) bestimmtes Steuerungsprogramm (50) regelmäßig oder zu vorgegebenen oder vorgebbaren Zeitpunkten ausgeführt wird und wobei zumindest eine aufgrund von im Rahmen der Ausführung erfasster Messwerte (52) resultierende mechatronische Kenngröße (56) automatisch und im Zusammenhang mit der automatischen Ausführung des Steuerungsprogramms (50) in Bezug auf zumindest eine andere mechatronische Kenngröße (56) bewertet wird.

7. Verfahren nach einem der vorangehenden Ansprüche,
wobei als Ergebnis der Bewertung der zumindest einen mechatronischen Kenngröße (56) automatisch eine Meldung (58) erzeugt wird, welche automatisch an diejenige Produktions- oder Werkzeugmaschine (36) oder deren Betreiber übermittelt wird, von der die zu bewertende mechatronische Kenngröße (56) stammt oder auf deren Messwerte (52) die zu bewertende mechatronische Kenngröße (56) zurückgeht.

8. Verfahren nach einem der vorangehenden Ansprüche,
wobei im Rahmen der Bewertung der zumindest einen mechatronischen Kenngröße (56) ein Zustand derjenigen Produktions- oder Werkzeugmaschine (36), von der die zu bewertende mechatronische Kenngröße (56) stammt oder auf deren Messwerte (52) die zu bewertende mechatronische Kenngröße (56) zurückgeht, ermittelt wird.

9. Verfahren nach einem der vorangehenden Ansprüche,
wobei im Rahmen der Bewertung der zumindest einen mechatronischen Kenngröße (56) eine Ausfallprognose bezüglich derjenigen Produktions- oder Werkzeugmaschine (36), von der die zu bewertende mechatronische Kenngröße (56) stammt oder auf deren Messwerte (52) die zu bewertende mechatronische Kenngröße (56) zurückgeht, ermittelt wird.

10. Computerprogramm mit Programmcodemitteln, um alle Schritte von jedem beliebigen der Ansprüche 1 bis 9 durchzuführen, wenn das Computerprogramm zwecks Bewertung zumindest einer mechatronischen Kenngröße (56) einer Produktions- oder Werkzeugmaschine (36) ausgeführt wird.

11. Computersystem (60) mit zumindest einer Verarbeitungseinheit (62) und einen Speicher (64), in den ein Computerprogramm nach Anspruch 10 geladen ist, das beim Betrieb des Computersystems (60) zwecks einer automatischen Bewertung zumindest einer mechatronischen Kenngröße (56) einer Produktions- oder Werkzeugmaschine (36) ausgeführt wird.

12. Computersystem (60) nach Anspruch 11, mit in der Cloud (32) erreichbaren Mitteln (44, 46, 54) zur Ausführung des Verfahrens nach einem der Ansprüche 1 bis 9.

13. Computersystem (60) nach Anspruch 12, mit Mitteln (44, 46, 55) zum Zugriff auf eine in der Cloud (32) erreichbare Datenbasis (30).
